(19)

Europäisches
Patentamt
European
Patent Office
Office européen
des brevets

(11) **EP 3 772 021 A1**

(12) **EUROPEAN PATENT APPLICATION**

(43) Date of publication:
    **03.02.2021 Bulletin 2021/05**

(51) Int Cl.:
    ***G06N 3/04*** *(2006.01)*   ***G06N 3/08*** *(2006.01)*

(21) Application number: **19189746.1**

(22) Date of filing: **02.08.2019**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **KH MA MD TN**

(71) Applicant: **Robert Bosch GmbH
    70442 Stuttgart (DE)**

(72) Inventors:
    • **Doerr, Aaron
      71083 Herrenberg (DE)**
    • **Boeru, Efim
      142324 Chekhow, Moscow (RU)**
    • **Astrakhantsev, Nikita
      662971 Krasnoyarsky Kray (RU)**
    • **Iben, Uwe
      141400 Khimki (RU)**

Remarks:
    Amended claims in accordance with Rule 137(2)
    EPC.

(54) **APPARATUS AND COMPUTER-IMPLEMENTED METHOD FOR DETERMINING AT LEAST ONE SOLVER-BASED ESTIMATE, AND APPARATUS AND COMPUTER-IMPLEMENTED METHOD FOR TRAINING A DEEP NEURAL NETWORK**

(57)    An apparatus (100) for determining at least one solver based estimate (se) is provided, wherein the apparatus (100) comprises: an input unit (110) being configured to determine or provide input data (id) for a trained deep neural network (NN); a first determination unit (120) being configured to propagate the input data (id) through the trained deep neural network (NN), wherein the input data (id) is provided as an input parameter in an input section of the trained deep neural network (NN), and wherein in an output section of the trained deep neural network (NN) at least one neural network based initial estimate (ie) for a predetermined solver (S) is provided; and a second determination unit (130) being configured to provide the at least one neural network based initial estimate (ie) to the pre-determined solver (S), wherein the at least one neural network based initial estimate (ie) is provided as an input parameter in an input section of the pre-determined solver (S), and wherein in an output section of the predetermined solver (S) the at least one solver based estimate (se) is provided.

Fig. 1

**Description**

State of the Art

The invention relates to an apparatus and computer-implemented method for determining at least one solver-based estimate, and an apparatus and computer-implemented method for training a deep neural network.

In several applications inverse problems appear, e.g. the control of robotic arms or spraying for smart agriculture. The determination time for inverse problems is a crucial factor in the application domain. Inverse problems are known to be hard so solve. For example, inversion may take more than 50 % of the total computation time and suffers from divergencies.

In a simulation example, a two-phase simulation for a hydraulic component can take weeks on a high-performance computer. The reduction of simulation time is reduction of development costs.

Disclosure of the Invention

The problems of the prior art are solved by an apparatus for determining at least one solver based estimate according to claim 1, a computer-implemented method for determining at least one solver based estimate according to a further independent claim, an apparatus for training a deep neural network according to a further independent claim, and a computer-implemented method for training a deep neural network according to a further independent claim.

According to a first aspect of this description an apparatus for determining at least one solver based estimate is provided, wherein the apparatus comprises: an input unit being configured to determine or provide input data for a trained deep neural network; a first determination unit being configured to propagate the input data through the trained deep neural network, wherein the input data is provided as an input parameter in an input section of the trained deep neural network, and wherein in an output section of the trained deep neural network at least one neural network based initial estimate for a pre-determined solver is provided; and a second determination unit being configured to provide the at least one neural network based initial estimate to the pre-determined solver, wherein the at least one neural network based initial estimate is provided as an input parameter in an input section of the pre-determined solver, and wherein in an output section of the pre-determined solver the at least one solver based estimate is provided.

The method advantageously reduces computational complexity by exploiting the low computational effort necessary to execute the trained neural network in order to obtain the estimate for the model. Exploiting the high approximation accuracy of the model on the other hand improves the quality of the model-based estimate and helps to avoid divergencies. Expressed differently, neural networks do not provide sufficient approximation accuracy in view of other methods. Thus, this aspect of the description is based on the assumption that neural networks are suitable to determine a very good initial guess for an input parameter of the more accurate model. In summary, the proposed approach provides more precise result in a faster way.

Thus, fast and accurate inversion for example for thermodynamic functions or kinematics is provided. The approach allows to achieve convergence in most of the cases. The proposed scheme based on a combination of the artificial neural network and a pre-determined solver for non-linear iteration methods is able to solve inversion problems robustly and fast.

According to an advantageous example, the apparatus further comprises: a convergence unit being configured to determine a convergence state of the at least one solver based estimate; and a discrimination unit being configured to adjust at least one parameter of the pre-determined solver and to re-execute the pre-determined solver with the at least one adjusted parameter if the convergence state indicates that the solver based estimate is not converging, or to provide the at least one solver based estimate if the convergence state indicates that the solver based estimate is converging.

Therefore, not convergence states are intercepted. By adjusting the parameter of the pre-determined solver, a high degree of convergence is reached.

According to an advantageous example, the apparatus further comprises: the at least one parameter comprises a determination mode of the pre-determined solver.

Switching the determination mode is beneficial, if the former determination mode does not provide convergence.

According to an advantageous example, the apparatus is characterized in that the at least one parameter of the solver comprises a neural network based domain, wherein in the output section of the trained deep neural network the neural network based domain is provided, and wherein the domain indicates an one- or multidimensional range of the at least one neural network based initial estimate.

By determining the domain, a further parameter is established to improve convergence or the method used for refining the initial neural network-based estimate.

According to an advantageous example, the apparatus is characterized in that the domain is adjusted by selecting a neighboring domain to re-execute the pre-determined solver in dependence on the neighboring domain, especially according to the specifics of the neighboring domain.

The neighboring domain may beneficially provide a hint for the apparatus/method towards a converging solution.

According to an advantageous example, the apparatus is characterized in that a first hidden layer arranged before the output section of the deep neural network comprises a linear activation function, in particular a Rectified Linear Unit, wherein the at least one neural network based initial estimate for the pre-determined solver is determined via the linear activation function.

This structure of the deep neural network in the form of the first hidden layer and its activation function revealed itself beneficial for the determination of the neural network-based estimate.

According to an advantageous example, the apparatus is characterized in that a/the first hidden layer arranged before the output section of the deep neural network comprises a SoftMax function as an activation function, wherein the at least one neural network-based domain for the pre-determined solver is determined via the SoftMax function.

This structure of the deep neural network in the form of the first hidden layer and its activation function revealed itself beneficial for the determination of the neural network-based estimate.

According to an advantageous example, the apparatus is characterized in that a second hidden layer arranged before the first hidden layer of the deep neural Network comprises a Sigmoid Function as an activation function.

This structure of the deep neural network in the form of the second hidden layer and its activation function revealed itself beneficial for the determination of the neural network-based estimate.

According to an advantageous example, the apparatus is characterized in that the deep neural network comprises a plurality of further hidden layers arranged before the second hidden layer, wherein the further hidden layers comprise an Exponential Linear Unit as an activation function.

This structure of the deep neural network in the form of the further hidden layers and their activation function revealed itself beneficial for the determination of the neural network-based estimate.

According to a second aspect of this description a simulation unit for simulating a physical system is provided, wherein the simulation unit comprises the apparatus according to the first aspect, wherein simulation unit comprises: the input unit being configured to provide the input data; and an output unit being configured to provide a simulation result representing the physical system based on at least one solver based estimate.

The trained neural network gives very precise initial approximations in form of the at least one initial neural network-based estimate, which are then passed to the Solver, for example rapid Newton's method. For example, for the inversion of fluid properties, it can be shown that the inversion is only -10 times slower than forward functions and stable, which is a great progress for flow simulations. Good results can be achieved in the areas of simulating liquids, including diesel and hydraulic oils.

According to a third aspect a control unit for operating a sensor-actuator system is provided, wherein the sensor-actuator system comprises at least one sensor and at least one actuator, wherein the control unit comprises the apparatus according to the first aspect, wherein the control unit comprises: the input unit being configured to determine the input data dependent on at least one sensor reading of the at least one sensor; and an output unit being configured to operate the at least one actuator based on at least one solver based estimate.

Execution time is crucial in sensor-actuator systems. As the proposed teaching achieves to determine the at least one solver-based estimate very precisely in a short period of time, the control unit makes real-time applications involving a solver for inverse problems possible.

According to a fourth aspect a computer-implemented method for determining at least one solver based estimate is provided, wherein the method comprises the following steps: determine or provide input data for a trained deep neural network; propagate the input data through the trained deep neural network, wherein the input data is provided as an input parameter in an input section of the trained deep neural network, and wherein in an output section of the trained deep neural network at least one neural network based initial estimate for a pre-determined solver is provided; and provide the at least one neural network based initial estimate to the pre-determined solver, wherein the at least one neural network based initial estimate is provided as an input parameter in an input section of the pre-determined solver, and wherein in an output section of the pre-determined solver the at least one solver based estimate is provided.

According to a fifth aspect a simulation method for simulating a physical system is provided, wherein the simulation method comprises the method according to the fourth aspect, wherein the simulation method comprises: provide the input data; and provide a simulation result representing the physical system based on at least one solver-based estimate.

According to a sixth aspect an operating method to operate a sensor-actuator system is provided, wherein the sensor-actuator system comprises at least one sensor and at least one actuator, wherein operating method comprises the method according to the fourth aspect, wherein the operating method comprises: determine the input data in dependence on at least one sensor reading of the at least one sensor; and operate the at least one actuator based on at least one solver based estimate.

According to a seventh aspect a computer-implemented method for training a deep neural network is provided, wherein the method comprises the following steps: determine or provide input data for the deep neural network; propagate the input data through the deep neural network, wherein the input data is provided as an input parameter in an input section of the deep neural network, and wherein in an output section of the deep neural network at least one neural network based initial estimate is provided.

According to an advantageous example, the method comprises: determine input data by a pre-determined inverse model in dependence on a provided solution; determine a training set comprising input data and the corresponding solution; and train the deep neural network with the determined training set.

Advantageously, this provides a computationally less expensive training method in terms of time. Therefore, the training method provides a fast training.

According to an advantageous example, the method comprises: provide the at least one neural network based initial estimate to the pre-determined solver, wherein the at least one neural network based initial estimate is provided as an input parameter in an input section of the pre-determined solver, and wherein in an output section of the pre-determined solver the at least one solver based estimate is provided; determine a convergence state of the at least one solver based estimate; determine a training set comprising the input data and the at least one neural network based initial estimate if the convergence state indicates that the at least one solver based estimate is converging; and train the deep neural network with the determined training set.

Advantageously, the training method incorporates the results of the solver in the form of the solver-based estimate and its convergence. Therefore, a very precise output of the trained neural network is provided.

According to an eighth aspect a computer program is provided, characterized in that the computer program comprises computer-readable instructions, the execution of which on a computer involves the execution of the method according to one of the previous aspects.

According to a ninth aspect a computer program product is provided, characterized by a machine-readable storage medium on which the computer program according to the eighth aspect is stored.

According to a tenth aspect an apparatus for training a deep neural network is provided, wherein the apparatus comprises: an input unit being configured to determine or provide input data for the deep neural network; a determination unit being configured to propagate the input data through the deep neural network, wherein the input data is provided as an input parameter in an input section of the deep neural network, and wherein in an output section of the deep neural network at least one neural network based initial estimate is provided,

According to an advantageous example, the apparatus further comprises: the input unit being configured to determine input data by a pre-determined inverse model in dependence on a provided solution, and to determine a training set comprising input data and the corresponding solution; and a training unit being configured to train the deep neural network with the determined training set.

According to an advantageous example, the apparatus further comprises: a second determination unit being configured to provide the at least one neural network based initial estimate to the pre-determined solver, wherein the at least one neural network based initial estimate is provided as an input parameter in an input section of the pre-determined solver, and wherein in an output section of the pre-determined solver the at least one solver based estimate is provided; a convergence unit being configured to determine a convergence state of the at least one solver based estimate; a training set generator being configured to determine a training set comprising the input data and the at least one neural network based initial estimate if the convergence state indicates that the at least one solver based estimate is converging; and a training unit being configured to train the deep neural network with the determined training set.

Another aspect of this description concerns an at least semi-autonomous machine, such as a motor vehicle, an industrial or domestic robot or a locking system, which comprises the apparatus according to one of the aforementioned aspects and which is operated in dependence on the at least one solver-based estimate. For example, the solver-based estimate provides the aforementioned partial autonomy of the machine.

Figure 1          depicts a schematic block diagram for determining at least one solver-based estimate;

Figure 2          depicts a schematic block diagram of a control unit and a sensor-actuator system;

Figure 3          depicts a schematic block diagram of simulation unit and of a physical system;

Figures 4 and 5   each depict a schematic arrangement for determining a neural network based initial estimate for a pre-determined solver;

Figure 6          depicts a schematic block diagram of simulation unit;

Figure 7          depicts schematically a control unit and a stationary robot arm;

Figure 8          depicts schematically a control unit and an agricultural machine;

Figure 9            depicts a schematical block diagram for training an artificial neural network;

Figure 10            depicts schematically an arrangement for the training of the artificial neural network; and

Figure 11            depicts schematically a training method.

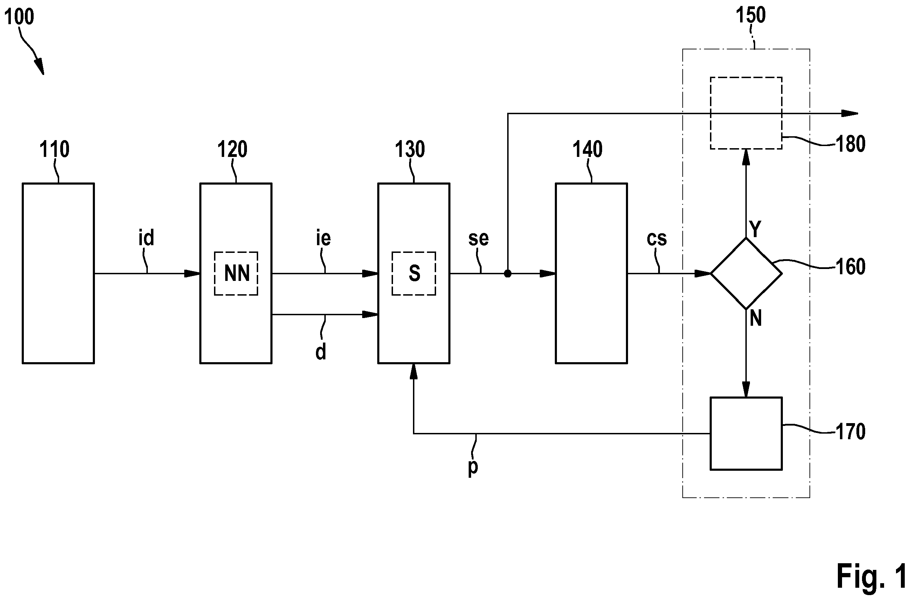

Figure 1 depicts a schematic block diagram for determining at least one solver-based estimate se. The description relates to a method and an apparatus 100 for determining the at least one solver-based estimate se. The apparatus 100 comprises an input unit 110 being configured to determine or provide input data id for a trained deep neural network NN.

A first determination unit 120 is configured to propagate the input data id through the trained deep neural network NN, wherein the input data id is provided as an input parameter in an input section of the trained deep neural network NN, and wherein in an output section of the trained deep neural network NN at least one neural network based initial estimate ie for a pre-determined solver S is provided.

A second determination unit 130 is configured to provide the at least one neural network based initial estimate ie to the pre-determined solver S, wherein the at least one neural network based initial estimate ie is provided as an input parameter in an input section of the pre-determined solver S, and wherein in an output section of the pre-determined solver S the at least one solver based estimate se is provided.

A convergence unit 140 is configured to determine a convergence state cs of the at least one solver-based estimate se. For example, the convergence unit 140 compares a plurality of subsequent solver-based estimates and if the difference between two subsequent estimates remains one or more times below a threshold, the convergence state cs is determined to indicate the convergence of the at least one solver-based estimate se. In dependence on the convergence state cs, a decision unit 160 determines the further processing.

A discrimination unit 150 comprises an adjustment unit 170 which is configured to adjust at least one parameter p of the pre-determined solver S and to re-execute the pre-determined solver S with the at least one adjusted parameter p if the convergence state cs indicates that the solver-based estimate se is not converging. For example, the at least one parameter p comprises a determination mode of the pre-determined solver S. In another example, the at least one parameter p of the solver S comprises a neural network based domain d, wherein in the output section of the trained deep neural network NN the neural network based domain d is provided, and wherein the domain d indicates an one- or multidimensional range of the at least one neural network based initial estimate ie.

The domain d is adjusted in the form that a neighboring domain is selected to re-execute the pre-determined solver S in dependence on or according to the specifics of the neighboring domain. In a fluid flow simulation example, a neighboring domain of the gas phase may be a transition domain from gas phase to two-phase domain.

The discrimination unit 150 comprises a provision unit 180 which is configured to provide the at least one solver-based estimate se if the convergence state cs indicates that the solver-based estimate se is converged.

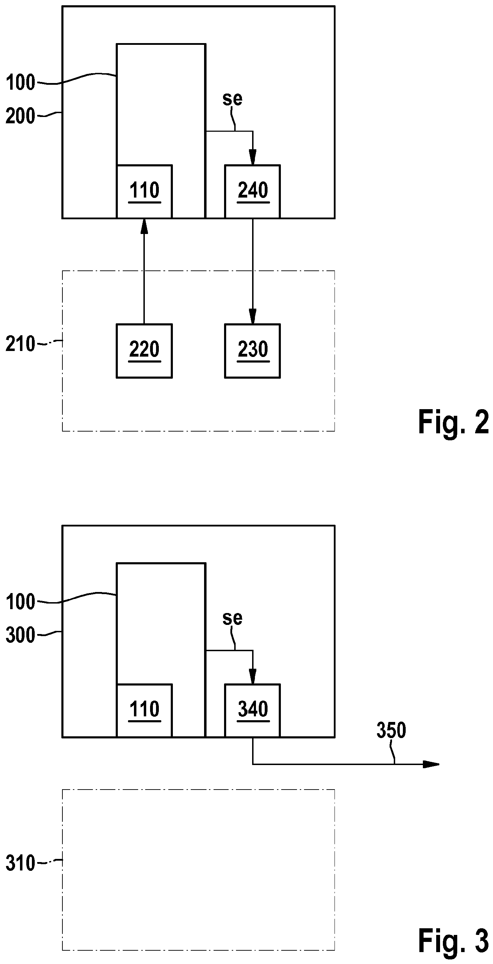

Figure 2 depicts a schematic block diagram of a control unit 200 and a sensor-actuator system 210. The sensor-actuator system 210 comprises at least one sensor 220 and at least one actuator 230, wherein the control unit 200 comprises the apparatus 100 of figure 1. The control unit 200 comprises the input unit 110 being configured to determine the input data id in dependence on at least one sensor reading of the at least one sensor 220. The control unit 200 comprises an output unit 240 being configured to operate the at least one actuator 230 based on at least one solver-based estimate se. The output unit 240 provides control signals to operate the at least one actuator 230.

In one example, the control unit 200 is part of a motor vehicle. The control unit 200 receives digital images from a video camera, which is aligned, for example, in the direction of travel and thus displays an area in front of the vehicle. The vehicle comprises, for example, a steering system, a braking system and a power train system. In an exemplary situation, an object S classified as an obstacle at the edge of the roadway is detected in a digital single image of a video stream. The control unit 200 determines a different trajectory as planned and controls the actuators of the vehicle in order to avoid a contact with the identified obstacle.

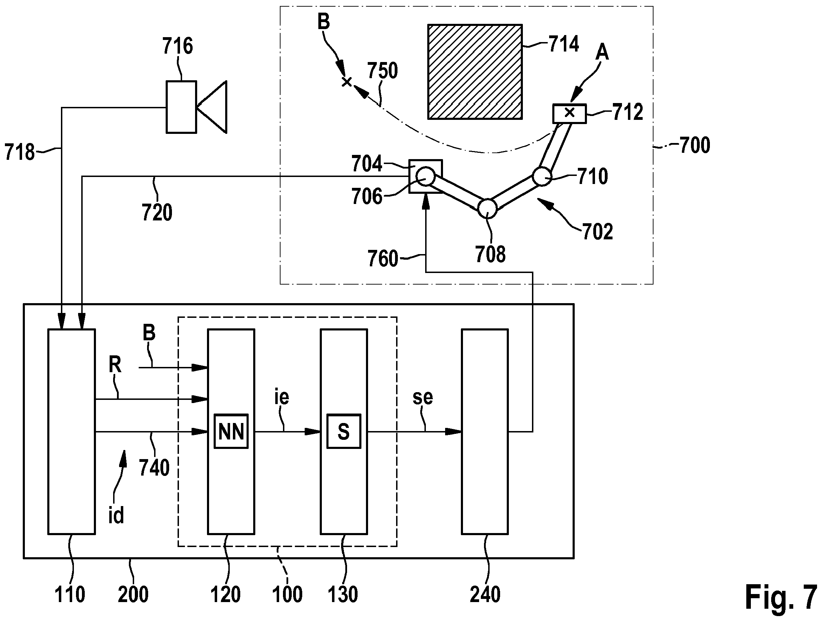

In another example of an industrial plant, the apparatus 100 is part of the control unit 200 of an industrial robot, cf. figure 7. The control unit 200 is configured to recognize an object to be grasped at a specific location. In order to grasp the object at a present location of the robot arm and objects in the way towards the specific location have to be taken into account when determining the trajectory towards the object to be grasped.

Another example of apparatus 100 concerns the control unit 200 of a mobile home robot such as a lawn mower or vacuum cleaner. For example, a video camera observes and identifies an area to be treated by the lawn mower or vacuum cleaner. In one example, a distinction is made between a drivable subsoil and a non-drivable subsoil such as a water surface. If an area is classified as water surface, then this underground is not passable and the mobile home robot has to avoid this area by determining a different trajectory as determined before.

The cases of application of the approach presented in this description are thus manifold. Of course, the measures disclosed in this description are not only applicable to digital images which, for example, depict an environment. Even one- or multidimensional data of a sensor can be used to determine the environment and take into account the present situation in the environment so that the environment can be taken into account by the measures presented in this description.

Figure 3 depicts a schematic block diagram of a simulation unit 300 and of a physical system 310. The simulation unit 300 comprises the apparatus 100 according to figure 1. The simulation unit 300 comprises the input unit 110 being configured to provide the input data id. The simulation unit 300 comprises an output unit 340 being configured to provide a simulation result 350 representing the physical system 310 based on at least one solver-based estimate se. The simulation result 350 is used to verify a design of the physical system 310, which is being simulated by the simulation unit 300.

In order to generate the input data id for simulation purposes, the input unit 110 determines, for example via simulation, the input data id, in dependence on the determined convergence state cs.

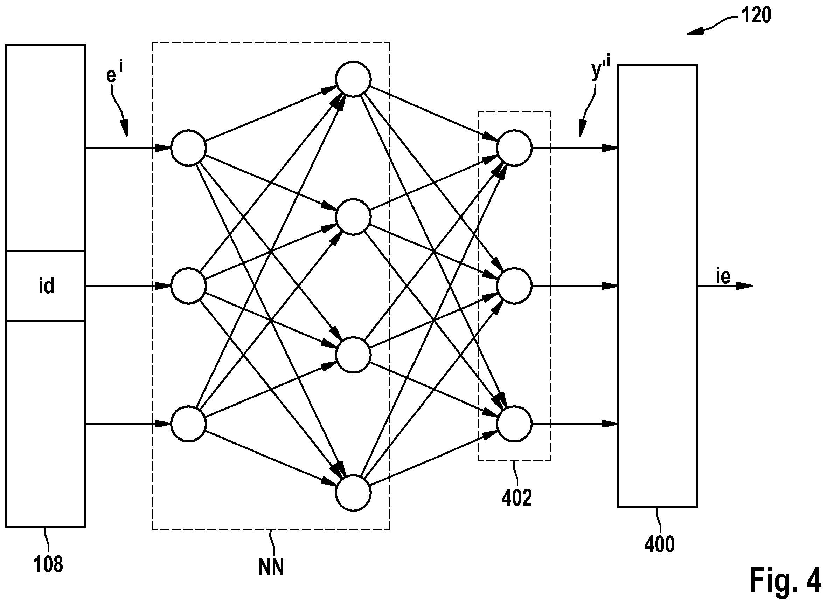

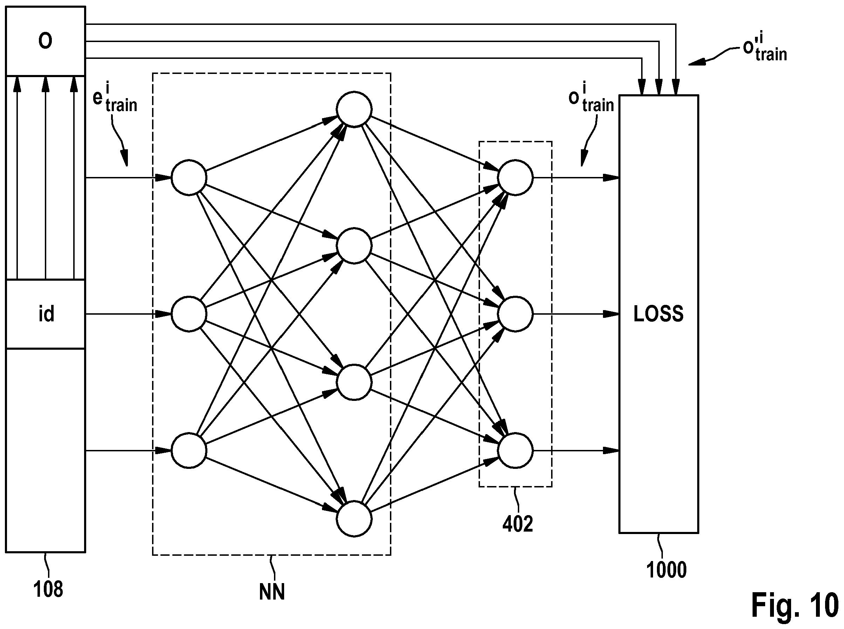

Figure 4 depicts a schematic arrangement for determining the neural network based initial estimate ie for the pre-determined solver. An arrangement for the training is shown in Figure 10. First the training is referred to.

Training data eiTrain is provided in the form of input data by an input interface 108. The arrangement comprises the artificial neural network NN with an input layer. For a time step i, an input tensor of the input data id is passed to the input layer. The input layer is part of the input section. For input data id, the output O is determined in the form of a prediction or is known beforehand. In time step i a tensor with observed values oitrain is determined from the output O, which are assigned to the observed values of the tensor eitrain. The output O comprises the at least one neural network based initial estimate. Each of the time series of input data id is assigned to one of three input nodes. In a forward path of the artificial neural network NN, the input layer is followed by at least one hidden layer. In the example, a number of nodes of the at least one hidden layer is greater than a number of the input nodes. This number is to be regarded as a hyper parameter. In the example, four nodes are provided in the hidden layer. The neural network NN, for example, is learned by the gradient descent method in the form of backpropagation. The training of the neural network NN is therefore supervised.

In the forward path in the example, an output layer 402 is provided after at least one hidden layer. Prediction values are output at output layer 402 of the output section of the neural network NN. In the example, an output node is assigned to each prediction value.

In each time step i a tensor o'itrain is determined in which the prediction values for this time step i are contained. In the example, this is fed to a training facility 1000 together with the column vector of the observed values oitrain. The training device 1000 is designed in the example to determine a prediction error by means of a loss function LOSS, in particular by means of a mean square error, and to train the model with it and by means of an optimizer, in particular an Adam optimizer. The loss function LOSS is determined in the example depending on a deviation, in particular the Mean Square Error, from the values of the tensor of the observed values oitrain and the tensor of the prediction values o'itrain.

The training is ended as soon as a fixed criterion is reached. In the example, the training is aborted if the loss does not decrease over several time steps, i.e. the Mean Square Error in particular does not decrease.

Test data is then entered into the model trained in this way. The model is generated by the training with the training data. The model is evaluated with the test data, in particular with regard to the mean value $\mu$ and covariance $\Sigma$.

According to the arrangement shown in Figure 4, a trained model is used to provide a prediction for the at least one neural network based initial estimate. The same data preprocessing steps are performed as for the training data. For example, scaling and a determination of input and output data takes place. This determination takes place in the example during the operation of the control unit 200 of figure 2, i.e. during the operation of a vehicle, a robot, an industrial plant or an agricultural device.

The input data that are entered into the trained artificial neural network NN. Depending on this, prediction values are determined. A determination score is determined depending on this.

Figure 4 shows a schematic arrangement for determining the at least one neural network based initial estimate. As described for the training, for a time step i a column vector ei is passed to the input layer for the input data id. The column vector is then passed to the input layer. Afterwards, in contrast to training, a determination device 400 determines the initial estimate depending on the prediction values y'i.

In particular, instructions of a computer program implementing the described Convolutional Neural Network 300 are provided for the implementation of the described procedures. Dedicated hardware can also be provided, in which a trained model is mapped.

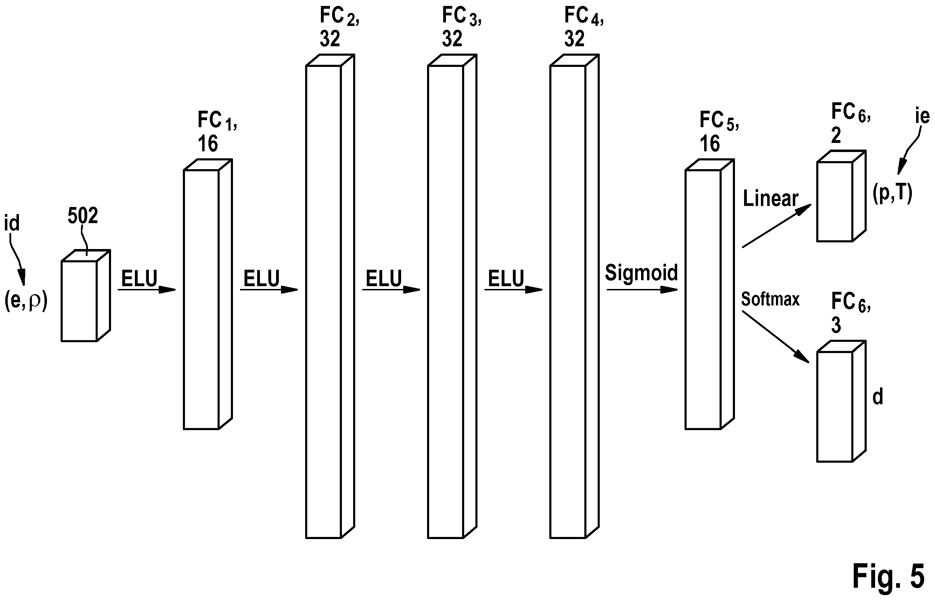

Figure 5 depicts a further schematic arrangement for determining the neural network based initial estimate for the pre-determined solver. The input data id is provided to an input layer 502. The input layer 502 provides its output to a fully connected layer FC1. Each one of fully connected layers FC2 to FC3 provides its output to the subsequent fully connected layer FC3 to FC4. The input layer 502 and the further hidden layers FC1-FC4 comprise an Exponential Linear Unit as an activation function. A hidden layer FC4 arranged before a hidden layer FC5 of the deep neural Network NN comprises a Sigmoid Function as an activation function.

The hidden layer FC5 arranged before the output section of the deep neural network NN comprises a linear activation function, in particular a Rectified Linear Unit, wherein the at least one neural network based initial estimate ie for the pre-determined solver S is determined via the linear activation function. The hidden layer FC5 arranged before the output section of the deep neural network NN comprises a SoftMax function as an activation function, wherein the at least one neural network-based domain d for the pre-determined solver S is determined via the SoftMax function. A fully connected output layer FC6 comprises and provides the initial estimate ie.

In many applications such as hydraulics, injection systems, brake systems there is a need to simulate fluid and gas flows for optimization. For simulation purposes so-called forward functions are used, which can be computed very fast, e.g. get intended energy and density from pressure and temperature. These functions are necessary for simulation of processes with significant temperature variations. In addition to forward functions, inverse functions are required. The inversion is done for example using Newton's iterative method, of the non-linearity of the problems to be solved.

According to an example of an inversion problem, the input data id comprises an energy density e and a density p. The initial estimate ie comprises corresponding pressure p and temperature T. The (p, T)-plane can be divided into three phase domains d: liquid, vapor (one-phase domains) and the two-phase domain / transition region between liquid and vapor. Each phase requires specific formulas for inversion, so domain knowledge is crucial. The initial estimate ie is used for Newton iterations.

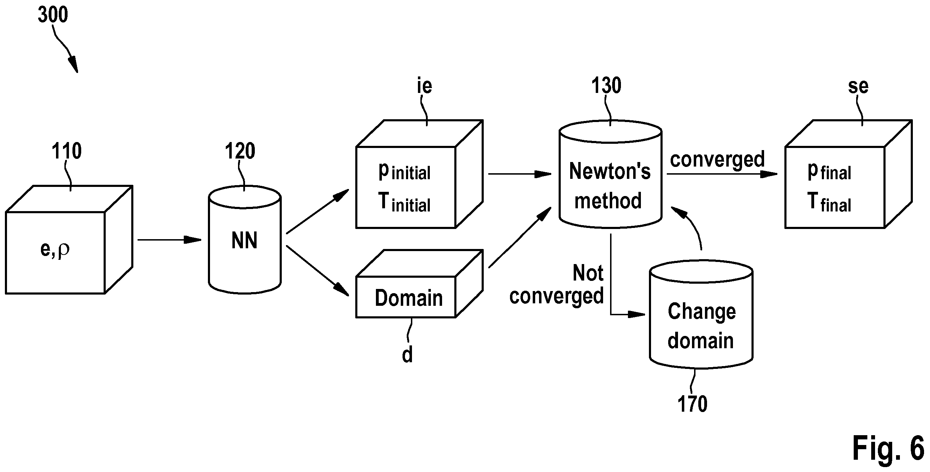

Figure 6 depicts a schematic block diagram of simulation unit. The neural network NN is a multilayer perceptron, MLP, which is trained on millions of pairs and has two outputs: one predicts the phase domain d, and the other builds the initial guess ie comprising an initial pressure pinitial and an initial temperature tinitial. The determination unit 130 uses Newton's iteration method in order to determine the solver-based estimate se comprising the final pressure pfinal and the final temperature Tfinal. If Newton's method diverges, then the domain d is changed and the determination unit 130 starts again until convergence is reached or all domains have been tried. Therefore, the determination unit 130 solves / approximates so called equations of state, which involve thermodynamic quantities such as pressure, density, temperature, and internal energy.

The method can be applied in applications where rapid temperature changes are simulated. For instance, a fuel flow from tank to engine can be simulated, hydraulic liquids in braking systems can be simulated. Also, simulations of thermo-management like cooling of electric systems and reusing heat can benefit. Also, simulations of cavitation erosion are an area of interest. Of course, the method is not only applicable in simulation applications as outlined in the following examples.

Figure 7 depicts schematically the control unit 200 and a scenery 700 with a stationary robot 702. The stationary robot 702 is fixed to the ground at a base 704. The stationary robot 702 comprises a plurality of joints 706, 708, 710 and an end effector 712. The task is to move the end-effector 712 from its present position A, probably during a movement of the end effector 712, to a position B without colliding the object 714. A camera sensor 716 is watching the scenery 700 and provides its picture stream 718 to the input unit 110 of the control unit 200. Furthermore, the stationary robot 702 provides a sensor signal stream 720 to the input unit 110, the sensor signal stream 720 representing the present state of the stationary robot 702.

A motion equation for a robot arm can be expressed by equation 7.1. The pre-determined solver S is configured to approximate the equation 7.1. The solver S comprises numerical determination units to provide the solver-based estimate se. The functions C, G, and Q depend on the robot arm of the stationary robot 702. The function X(t) represents the position of the end effector 712 in dependence on time t.

$$\ddot{X}(t) + C\big(X(t), \dot{X}(t)\big) + G\big(X(t)\big) = Q(t) \qquad (7.1)$$

A restriction of movement R by the object 714 could be expressed by inequation 7.2, wherein XL and XR represent edges of the object 714 in space.

$$X_L \le X(t) \le X_R \qquad (7.2)$$

The input unit 110 determines the input data id comprising the restriction of movement R and a present state of the robot 740 comprising the position A of the end effector.

In the robotic control, kinematic analysis allows obtaining information on the position of each robot's component (end effector). In inverse kinematics, the desired position B and orientation of the end effector 712 in Cartesian space are given while the set of robot's joint angles in joint space is calculated. The calculation of inverse kinematics is necessary in real-time control for trajectory generation and motion control. However, the equations that need to be solved are nonlinear and numerical methods are required to solve them.

Therefore, the trained deep neural network NN determines the initial estimate ie for the solver S. The initial estimate ie comprises in an example a set of joint angles q1, ..., qn. An inverse kinematics function IKF according to equation 7.3 is defined to determine the set of joint angles q1, ... qn in dependence on the position px, py, pz and orientation ox, oy, oz of the end effector 712.

$$\begin{bmatrix} q1 \\ ... \\ qn \end{bmatrix} = IKF \begin{pmatrix} px \\ py \\ pz \\ ox \\ oy \\ oz \end{pmatrix} \qquad 7.3$$

The trained deep neural network is used to accelerate the computations by providing an accurate initial guess according to the initial estimate ie representing a trajectory in form of sets of joint angles q1 to qn. The solver S refines the initial estimate ie to the solver-based estimate in form of a final trajectory 750 represented by final sets of joint angles.

The output unit 240 determines control signals 760 to operate the robot 702 in order to move the end effector 712 along the final trajectory 750 without touching the object 714.

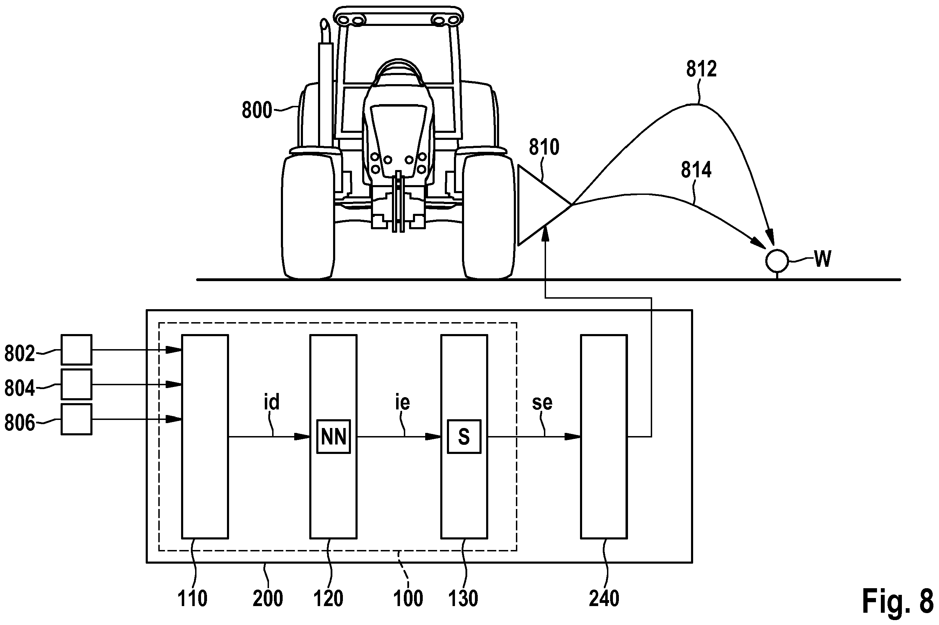

Figure 8 depicts schematically the control unit 200 and an agriculture machinery 800 in form of a tractor and/or a trailer. A camera 802 mounted on the agriculture machinery 800 provides a picture stream to the input unit 110. The input unit 110 determines a location of weeds W with respect to the machinery 800. An air sensor 804 of the agriculture machinery 800 provides a strength of outdoor air velocity and direction. A velocity sensor 806 of the agriculture machinery 800 provides a velocity of the agriculture machinery 800. The input unit 110 may serve to collect all the input data id, for example, the velocity of the agriculture machinery 800, the velocity of outdoor air, the strength of outdoor air, spray parameters like droplet size and droplet distribution, spray angle, spray momentum and the location of the weed W. The input unit 110 provides these inputs data id to the determination unit 120.

The weed W should be eliminated by chemical liquid using a spray device 810 mounted to the agriculture machinery 800. In order to hit the weed W, the spray nozzle of the spray device 810 has to be focused such that one of the exemplary spray trajectories 812, 814 meets the weed W. The trajectory 812, 814 can be modeled by three-dimensional time dependent nonlinear algebraic equations or ordinary nonlinear differential equations based on the force equilibrium, e.g. gravitation force, aerodynamic drag forces. The set of equations depends on the accuracy requirements.

Spray momentum, spray angle and other parameters such as droplet sizes and distributions are input parameters in the sense of the initial estimate ie of these equations. These initial estimate ie influences the trajectory 812, 814 of the spray and is determined by the trained deep neural network NN. The solver-based estimate se is determined by the solver S in such a manner, that the weed W is hit. The trained deep neural network NN may for example take the shortest connection from the spray nozzle to the weed W in form of the trajectory 814.

Therefore, non-linear equations of different types can be solved by stable and fast numerical methods.

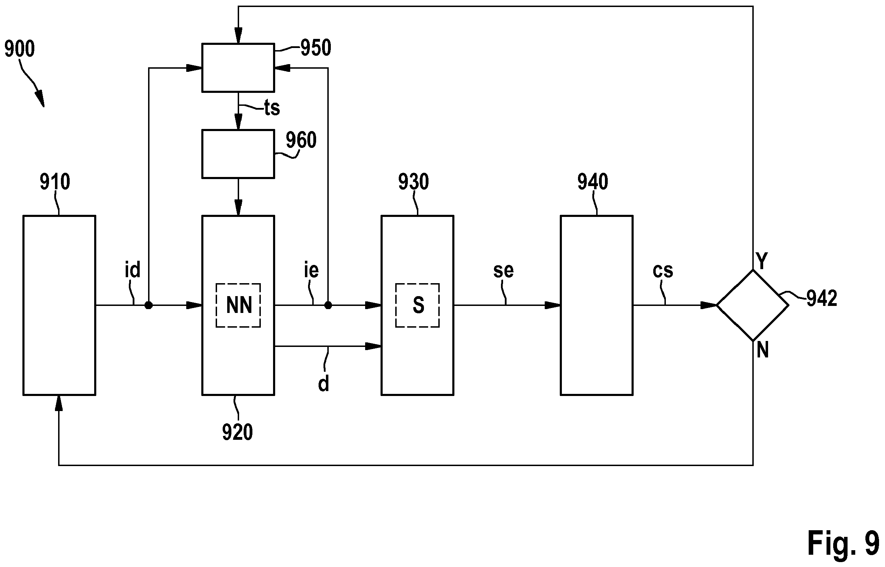

Figure 9 depicts a schematical block diagram for training the artificial deep neural network NN. An apparatus 900 for training a deep neural network NN comprises an input unit 910 being configured to determine or provide input data id for the deep neural network NN. A first determination unit 920 is configured to propagate the input data id through the deep neural network NN, wherein the input data id is provided as an input parameter in an input section of the deep neural network NN, and wherein in an output section of the deep neural network NN at least one neural network based initial estimate ie for a pre-determined solver S is provided. The deep neural network NN could be configured in a pre-trained state with initial start values for each neuron.

A second determination unit 930 is configured to provide the at least one neural network based initial estimate ie to the pre-determined solver S, wherein the at least one neural network based initial estimate ie is provided as an input parameter in an input section of the pre-determined solver S, and wherein in an output section of the pre-determined solver S the at least one solver based estimate se is provided.

A convergence unit 940 is configured to determine a convergence state cs of the at least one solver-based estimate se.

If the convergence state cs indicates that the at least one solver-based estimate se is not converging, then no training set is generated and a new training iteration is started by branching to the input unit 910 via a decision unit 942.

If the convergence state cs indicates that the at least one solver-based estimate se is converging, then the decision unit 942 branches to a training set generator 950. The training set generator 950 is configured to determine a training set ts comprising the input data id and the at least one neural network based initial estimate ie. A training unit 960 is configured to train the deep neural network NN with the determined training set ts. For example, the training is executed as exemplified to figure 10 above.

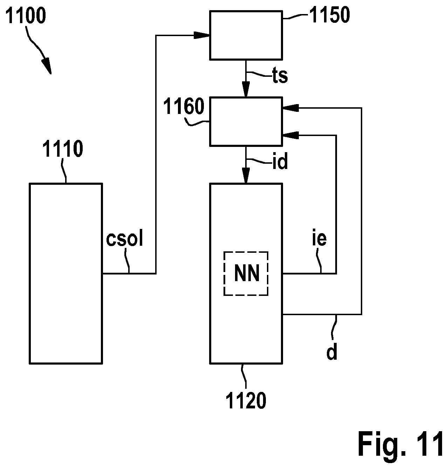

Figure 11 depicts schematically a training method for training the deep neural network NN. The training method is applied in cases where a solution csol with a converged state cs is available to directly compute the input data id due to the formulation of the underlying mathematical models. The solution csol represents the neural network based initial estimate ie when executing the trained neural network NN. An apparatus 1100 for training the deep neural network NN comprises an input unit 1110 being configured to provide a set of converging solutions csol which are known a priori to a training set generator 1150. The training set generator 1150 is configured to determine a training set ts comprising the known solution csol and corresponding input data id. In order to accomplish this task, the training set generator 1150 comprises an inverse model in order to determine the input data id for a specific given solution csol. The inverse model is for example represented by a set of mathematical functions. The inverse model provides a mapping between the input of the inverse model in form of the solution csol and the output of the inverse model in the form of the input data id. The inverse-model is pre-determined.

A training unit 1160 which is also called input unit is configured to train the deep neural network NN with the determined training set ts. For example, the training with the training unit 1160 is executed as exemplified to figure 10 above.

A determination unit 1120 is configured to propagate the input data id through the deep neural network NN, wherein the input data id is provided as an input parameter in an input section of the deep neural network NN, and wherein in an output section of the deep neural network NN at least one neural network based estimate ie for the known solution cs is provided. The deep neural network NN could be configured in a pre-trained state with initial start values for each neuron. The estimate ie and the estimated domain d are fed to the training unit 1160 to evaluate the training progress. For example, the training unit 1160 compares the neural network based estimate ie and the corresponding solution csol. If the comparison results in a sufficient match of the neural network based estimate ie and the corresponding solution, the corresponding training set ts is selected for back-propagating it through the artificial neural network NN.

When compared to Figure 9, the pre-determined solver is not present in the training stage. The training success is only depending from the training sets ts and the neural network-based estimate ie, and the domain d.

The a priori known solution csol is generated in advance regardless of training success (e.g. as random points in a pressure and temperature range), so there is no feedback from the NN to the input unit 1100.

Expressed in a more mathematical way: In order to evaluate a relationship id=f(cs) backwards, cs=g(id) is determined, which only works iteratively. In training, however, we can use the fact that the deep neural network NN basically estimates the relationship cs=g(id) so that this estimate can be improved by the solver. The method shown in figure 11 trains the relationship cs=g(id) by specifying the convergence state cs and calculating the corresponding input data id. A vector (cs,id) fulfills both relations, i.e. id=f(cs) and cs=g(id).

The previous figure 9 uses the solver's improved estimation in training, which is a more accurate method than the one in Figure 11. However, the training method of figure 11 it is computationally less expensive.

## Claims

1. An apparatus (100) for determining at least one solver-based estimate (se), wherein the apparatus (100) comprises:

   an input unit (110) being configured to determine or provide input data (id) for a trained deep neural network (NN);
   a first determination unit (120) being configured to propagate the input data (id) through the trained deep neural network (NN), wherein the input data (id) is provided as an input parameter in an input section of the trained deep neural network (NN), and wherein in an output section of the trained deep neural network (NN) at least one neural network based initial estimate (ie) for a pre-determined solver (S) is provided; and
   a second determination unit (130) being configured to provide the at least one neural network based initial estimate (ie) to the pre-determined solver (S), wherein the at least one neural network based initial estimate (ie) is provided as an input parameter in an input section of the pre-determined solver (S), and wherein in an output section of the pre-determined solver (S) the at least one solver based estimate (se) is provided.

2. The apparatus (100) according to claim 1, wherein the apparatus further comprises:

   a convergence unit (140) being configured to determine a convergence state (cs) of the at least one solver-based estimate (se); and
   a discrimination unit (150) being configured to adjust at least one parameter (p) of the pre-determined solver (S) and to re-execute the pre-determined solver (S) with the at least one adjusted parameter (p) if the convergence state (cs) indicates that the solver based estimate (se) is not converging, or to provide the at least one solver based estimate (se) if the convergence state (cs) indicates that the solver based estimate (se) is converging.

3. The apparatus (100) according to claim 2, wherein the at least one parameter (p) comprises a determination mode of the pre-determined solver (S).

4. The apparatus (100) according to claim 2 or 3, wherein the at least one parameter (p) of the solver (S) comprises a neural network based domain (d), wherein in the output section of the trained deep neural network (NN) the neural network based domain (d) is provided, and wherein the domain (d) indicates an one- or multidimensional range of the at least one neural network based initial estimate (ie).

5. The apparatus (100) according to claim 4, wherein the domain (d) is adjusted in the form that a neighbouring domain is selected to re-execute the pre-determined solver (S) according to the specifics of the neighbouring domain.

6. The apparatus (100) according to one of the preceding claims, wherein a first hidden layer (FC5) arranged before the output section of the deep neural network (NN) comprises a linear activation function, in particular a Rectified Linear Unit, wherein the at least one neural network based initial estimate (ie) for the pre-determined solver (S) is determined via the linear activation function.

7. The apparatus (100) according to one of claims 4 to 6, wherein a/the first hidden layer (FC5) arranged before the output section of the deep neural network (NN) comprises a SoftMax function as an activation function, wherein the at least one neural network based domain (d) for the pre-determined solver (S) is determined via the SoftMax function.

8. The apparatus (100) according to one of claims 6 or 7, wherein a second hidden layer (FC4) arranged before the first hidden layer (FC5) of the deep neural Network (NN) comprises a Sigmoid Function as an activation function.

9. The apparatus (100) according to one of the preceding claims, wherein the deep neural network (NN) comprises a plurality of further hidden layers (FC1-FC3) arranged before the second hidden layer (FC4), wherein the further hidden layers (FC1-FC3) comprise an Exponential Linear Unit as an activation function.

10. A simulation unit (300) for simulating a physical system (310), wherein the simulation unit (300) comprises the apparatus (100) according to one of preceding claims 1 to 9, wherein simulation unit (300) comprises:

    the input unit (110) being configured to provide the input data (id); and
    an output unit (240) being configured to provide a simulation result (350) representing the physical system (310) based on at least one solver-based estimate (se).

11. A control unit (200) for operating a sensor-actuator system (210), wherein the sensor-actuator system (210) comprises at least one sensor (220) and at least one actuator (230), wherein the control unit (200) comprises the apparatus (100) according to one of preceding claims 1 to 9, wherein the control unit (200) comprises:

    the input unit (110) being configured to determine the input data (100) in dependence on at least one sensor reading of the at least one sensor (220); and
    an output unit (240) being configured to operate the at least one actuator (230) based on at least one solver-based estimate (se).

12. A computer-implemented method for determining at least one solver-based estimate (se), wherein the method comprises the following steps:

    determine or provide input data (id) for a trained deep neural network (NN);
    propagate the input data (id) through the trained deep neural network (NN), wherein the input data (id) is provided as an input parameter in an input section of the trained deep neural network (NN), and wherein in an output section of the trained deep neural network (NN) at least one neural network based initial estimate (ie) for a pre-determined solver (S) is provided; and
    provide the at least one neural network based initial estimate (ie) to the pre-determined solver (S), wherein the at least one neural network based initial estimate (ie) is provided as an input parameter in an input section of the pre-determined solver (S), and wherein in an output section of the pre-determined solver (S) the at least one solver based estimate (se) is provided.

13. The method according to the claim 12, wherein the method is adapted to run an apparatus (100) according to one of the claims 2 to 9.

**14.** A simulation method for simulating a physical system (310), wherein the simulation method comprises the method according to claim 12 or 13, wherein the simulation method comprises:

provide the input data (id); and
provide a simulation result (350) representing the physical system (310) based on at least one solver-based estimate (se).

**15.** An operating method to operate a sensor-actuator system (210), wherein the sensor-actuator system (210) comprises at least one sensor (220) and at least one actuator (230), wherein operating method comprises the method according to claim 12 or 13, wherein the operating method comprises:

determine the input data (id) in dependence on at least one sensor reading of the at least one sensor (220); and
operate the at least one actuator (230) based on at least one solver-based estimate (se).

**16.** A computer-implemented method for training a deep neural network (NN), wherein the method comprises the following steps:

determine or provide input data (id) for the deep neural network (NN); and
propagate the input data (id) through the deep neural network (NN), wherein the input data (id) is provided as an input parameter in an input section of the deep neural network (NN), and wherein in an output section of the deep neural network (NN) at least one neural network based initial estimate (ie) is provided.

**17.** The method according to claim 16, wherein the method further comprises:

determine input data (id) by a pre-determined inverse model in dependence on a provided solution (csol);
determine a training set (ts) comprising input data (id) and the corresponding solution (csol); and
train the deep neural network (NN) with the determined training set (ts).

**18.** The method according to claim 16, wherein the method further comprises:

provide the at least one neural network based initial estimate (ie) to the pre-determined solver (S), wherein the at least one neural network based initial estimate (ie) is provided as an input parameter in an input section of the pre-determined solver (S), and wherein in an output section of the pre-determined solver (S) the at least one solver based estimate (se) is provided;
determine a convergence state (cs) of the at least one solver-based estimate (se);
determine a training set (ts) comprising the input data (id) and the at least one neural network based initial estimate (ie) if the convergence state (cs) indicates that the at least one solver-based estimate (se) is converging; and
train the deep neural network (NN) with the determined training set (ts).

**19.** A computer program, **characterized in that** the computer program comprises computer-readable instructions, the execution of which on a computer involves the execution of the method according to one of claims 12 to 18.

**20.** A computer program product, **characterized by** a machine-readable storage medium on which the computer program according to claim 19 is stored.

**21.** An apparatus (900; 1100) for training a deep neural network (NN), wherein the apparatus (900; 1100) comprises:

an input unit (910; 1150) being configured to determine or provide input data (id) for the deep neural network (NN); and
a determination unit (920; 1120) being configured to propagate the input data (id) through the deep neural network (NN), wherein the input data (id) is provided as an input parameter in an input section of the deep neural network (NN), and wherein in an output section of the deep neural network (NN) at least one neural network based initial estimate (ie) is provided.

**22.** The apparatus (1100) according to claim 21, wherein the apparatus (1100) further comprises:

the input unit (1150) being configured to determine input data (id) by a pre-determined inverse model in dependence on a provided solution (csol), and to determine a training set (ts) comprising input data (id) and the corresponding solution (csol); and

a training unit (1160) being configured to train the deep neural network (NN) with the determined training set (ts).

**23.** The apparatus (900) according to claim 21, wherein the apparatus (900) further comprises:

a second determination unit (930) being configured to provide the at least one neural network based initial estimate (ie) to the pre-determined solver (S), wherein the at least one neural network based initial estimate (ie) is provided as an input parameter in an input section of the pre-determined solver (S), and wherein in an output section of the pre-determined solver (S) the at least one solver based estimate (se) is provided;

a convergence unit (940) being configured to determine a convergence state (cs) of the at least one solver-based estimate (se);

a training set generator (950) being configured to determine a training set (ts) comprising the input data (id) and the at least one neural network based initial estimate (ie) if the convergence state (cs) indicates that the at least one solver-based estimate (se) is converging; and

a training unit (960) being configured to train the deep neural network (NN) with the determined training set (ts).

**Amended claims in accordance with Rule 137(2) EPC.**

**1.** An apparatus (100) for determining at least one solver-based estimate (se), wherein the apparatus (100) comprises:

an input unit (110) being configured to determine or provide input data (id) for a trained deep neural network (NN);

a first determination unit (120) being configured to propagate the input data (id) through the trained deep neural network (NN), wherein the input data (id) is provided as an input parameter in an input section of the trained deep neural network (NN), and wherein in an output section of the trained deep neural network (NN) at least one neural network based initial estimate (ie) for a pre-determined solver (S) is provided; and

a second determination unit (130) being configured to provide the at least one neural network based initial estimate (ie) to the pre-determined solver (S), wherein the at least one neural network based initial estimate (ie) is provided as an input parameter in an input section of the pre-determined solver (S), and wherein in an output section of the pre-determined solver (S) the at least one solver based estimate (se) is provided; and wherein the apparatus further comprises:

a convergence unit (140) being configured to determine a convergence state (cs) of the at least one solver-based estimate (se); and

a discrimination unit (150) being configured to adjust at least one parameter (p) of the pre-determined solver (S) and being configured to re-execute the pre-determined solver (S) with the at least one adjusted parameter (p) if the convergence state (cs) indicates that the solver based estimate (se) is not converging, or to provide the at least one solver based estimate (se) if the convergence state (cs) indicates that the solver based estimate (se) is converging.

**2.** The apparatus (100) according to claim 1, wherein the at least one parameter (p) comprises a determination mode of the pre-determined solver (S).

**3.** The apparatus (100) according to claim 1 or 2, wherein the at least one parameter (p) of the solver (S) comprises a neural network based domain (d), wherein in the output section of the trained deep neural network (NN) the neural network based domain (d) is provided, and wherein the domain (d) indicates an one- or multidimensional range of the at least one neural network based initial estimate (ie).

**4.** The apparatus (100) according to claim 3, wherein the domain (d) is adjusted in the form that a neighbouring domain is selected to re-execute the pre-determined solver (S).

**5.** The apparatus (100) according to one of the preceding claims, wherein a first hidden layer (FC5) arranged before the output section of the deep neural network (NN) comprises a linear activation function, in particular a Rectified Linear Unit, wherein the at least one neural network based initial estimate (ie) for the pre-determined solver (S) is determined via the linear activation function.

**6.** The apparatus (100) according to one of claims 3 to 5, wherein a/the first hidden layer (FC5) arranged before the output section of the deep neural network (NN) comprises additionally a SoftMax function as an activation function, wherein the at least one neural network based domain (d) for the pre-determined solver (S) is determined via the SoftMax function.

7. The apparatus (100) according to one of claims 5 or 6, wherein a second hidden layer (FC4) arranged before the first hidden layer (FC5) of the deep neural Network (NN) comprises a Sigmoid Function as an activation function.

8. The apparatus (100) according to one of the preceding claims, wherein the deep neural network (NN) comprises a plurality of further hidden layers (FC1-FC3) arranged before the second hidden layer (FC4), wherein the further hidden layers (FC1-FC3) comprise an Exponential Linear Unit as an activation function.

9. A simulation unit (300) for simulating a physical system (310), wherein the simulation unit (300) comprises the apparatus (100) according to one of preceding claims 1 to 8, wherein simulation unit (300) comprises:

    the input unit (110) being configured to provide the input data (id); and
    an output unit (240) being configured to provide a simulation result (350) representing the physical system (310) based on at least one solver-based estimate (se).

10. A control unit (200) for operating a sensor-actuator system (210), wherein the sensor-actuator system (210) comprises at least one sensor (220) and at least one actuator (230), wherein the control unit (200) comprises the apparatus (100) according to one of preceding claims 1 to 8, wherein the control unit (200) comprises:

    the input unit (110) being configured to determine the input data (100) in dependence on at least one sensor reading of the at least one sensor (220); and
    an output unit (240) being configured to operate the at least one actuator (230) based on at least one solver-based estimate (se).

11. A computer-implemented method for determining at least one solver-based estimate (se), wherein the method comprises the following steps:

    determine or provide input data (id) for a trained deep neural network (NN);
    propagate the input data (id) through the trained deep neural network (NN), wherein the input data (id) is provided as an input parameter in an input section of the trained deep neural network (NN), and wherein in an output section of the trained deep neural network (NN) at least one neural network based initial estimate (ie) for a pre-determined solver (S) is provided; and
    provide the at least one neural network based initial estimate (ie) to the pre-determined solver (S), wherein the at least one neural network based initial estimate (ie) is provided as an input parameter in an input section of the pre-determined solver (S), and wherein in an output section of the pre-determined solver (S) the at least one solver based estimate (se) is provided; and
    determine a convergence state (cs) of the at least one solver-based estimate (se); and
    adjust at least one parameter (p) of the pre-determined solver (S) and to re-execute the pre-determined solver (S) with the at least one adjusted parameter (p) if the convergence state (cs) indicates that the solver based estimate (se) is not converging, or to provide the at least one solver based estimate (se) if the convergence state (cs) indicates that the solver based estimate (se) is converging.

12. A simulation method for simulating a physical system (310), wherein the simulation method comprises the method according to claim 11, wherein the simulation method comprises:

    provide the input data (id); and
    provide a simulation result (350) representing the physical system (310) based on at least one solver-based estimate (se).

13. An operating method to Operate a sensor-actuator system (210), wherein the sensor-actuator system (210) comprises at least one sensor (220) and at least one actuator (230), wherein operating method comprises the method according to claim 11, wherein the operating method comprises:

    determine the input data (id) in dependence on at least one sensor reading of the at least one sensor (220); and
    operate the at least one actuator (230) based on at least one solver-based estimate (se).

**14.** A computer-implemented method for training a deep neural network (NN) for ultization according to claim 1 or 11, wherein the method comprises the following steps:

determine or provide input data (id) for the deep neural network (NN); and
propagate the input data (id) through the deep neural network (NN), wherein the input data (id) is provided as an input parameter in an input section of the deep neural network (NN), and wherein in an output section of the deep neural network (NN) at least one neural network based initial estimate (ie) is provided.

**15.** The method according to claim 14, wherein the method further comprises:

determine input data (id) by a pre-determined inverse model in dependence on a provided solution (csol);
determine a training set (ts) comprising input data (id) and the corresponding solution (csol); and
train the deep neural network (NN) with the determined training set (ts).

**16.** The method according to claim 14, wherein the method further comprises:

provide the at least one neural network based initial estimate (ie) to the pre-determined solver (S), wherein the at least one neural network based initial estimate (ie) is provided as an input parameter in an input section of the pre-determined solver (S), and wherein in an output section of the pre-determined solver (S) the at least one solver based estimate (se) is provided;
determine a convergence state (cs) of the at least one solver-based estimate (se);
determine a training set (ts) comprising the input data (id) and the at least one neural network based initial estimate (ie) if the convergence state (cs) indicates that the at least one solver-based estimate (se) is converging; and
train the deep neural network (NN) with the determined training set (ts).

**17.** A computer program, comprsing instructions which, when the computer is carried out by a computer, cause the computer to carry out the method according to one of claims 11 to 16.

**18.** A computer program product, **characterized by** a machine-readable storage medium on which the computer program according to claim 17 is stored.

**19.** An apparatus (900; 1100) configured to train a deep neural network (NN) according to claim 15,

**20.** The apparatus (1100) according to claim 18, wherein the apparatus (1100) further comprises:

the input unit (1150) being configured to determine input data (id) by a pre-determined inverse model in dependence on a provided solution (csol), and to determine a training set (ts) comprising input data (id) and the corresponding solution (csol); and
a training unit (1160) being configured to train the deep neural network (NN) with the determined training set (ts).

**21.** The apparatus (900) according to claim 18, wherein the apparatus (900) further comprises:

a second determination unit (930) being configured to provide the at least one neural network based initial estimate (ie) to the pre-determined solver (S), wherein the at least one neural network based initial estimate (ie) is provided as an input parameter in an input section of the pre-determined solver (S), and wherein in an output section of the pre-determined solver (S) the at least one solver based estimate (se) is provided;
a convergence unit (940) being configured to determine a convergence state (cs) of the at least one solver-based estimate (se);
a training set generator (950) being configured to determine a training set (ts) comprising the input data (id) and the at least one neural network based initial estimate (ie) if the convergence state (cs) indicates that the at least one solver-based estimate (se) is converging; and
a training unit (960) being configured to train the deep neural network (NN) with the determined training set (ts).

Fig. 1

Fig. 2

Fig. 3

Fig. 4

id → (e,ρ) → 502 → ELU → FC₁, 16 → ELU → FC₂, 32 → ELU → FC₃, 32 → ELU → FC₄, 32 → Sigmoid → FC₅, 16 → Linear → FC₆, 2 → (p,T) ← ie; FC₅, 16 → Softmax → FC₆, 3 → d

**Fig. 5**

Fig. 6

300

110 — e,ρ

120 — NN

ie

$p_{initial}$
$T_{initial}$

Domain

d

130 — Newton's method

converged

se

$p_{final}$
$T_{final}$

Not converged

170 — Change domain

EP 3 772 021 A1

Fig. 7

EP 3 772 021 A1

Fig. 8

Fig. 9

Fig. 10

EP 3 772 021 A1

Fig. 11

Europäisches
Patentamt

European
Patent Office

Office européen
des brevets

# EUROPEAN SEARCH REPORT

Application Number

EP 19 18 9746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Zhong-Hua Han: "SURROOPT: A Generic Surrogate-Based Optimization Code for Aerodynamic and Multidisciplinary Design", 30th Congress of the International Council of the Aeronautical Sciences - ICA 2016, 25 September 2016 (2016-09-25), XP055663547, DCC, Daejeon, Korea Retrieved from the Internet: URL:https://pdfs.semanticscholar.org/cd16/943448a4a5074db16b4d1c9b2cccc9919f9f.pdf [retrieved on 2020-01-30] * abstract * * page 1 - page 6 * * page 8 - page 9 * * figures 1, 8; table 1 * | 1-23 | INV. G06N3/04 G06N3/08 |
| A | BAHA Y. MIRGHANI ET AL: "Enhanced Simulation-Optimization Approach Using Surrogate Modeling for Solving Inverse Problems", ENVIRONMENTAL FORENSICS, vol. 13, no. 4, 4 December 2012 (2012-12-04), pages 348-363, XP055663339, ISSN: 1527-5922, DOI: 10.1080/15275922.2012.702333 * the whole document * | 1-23 | TECHNICAL FIELDS SEARCHED (IPC) G06N |

-/--

The present search report has been drawn up for all claims

| Place of search | Date of completion of the search | Examiner |
|---|---|---|
| The Hague | 6 February 2020 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 19 18 9746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BRIGHAM ET AL: "Surrogate-Model Accelerated Random Search algorithm for global optimization with applications to inverse material identification", COMPUTER METHODS IN APPLIED MECHANICS AND ENGINEERING, NORTH-HOLLAND, AMSTERDAM, NL, vol. 196, no. 45-48, 29 August 2007 (2007-08-29), pages 4561-4576, XP022218712, ISSN: 0045-7825, DOI: 10.1016/J.CMA.2007.05.013 * the whole document * ----- | 1-23 | |

|  |  |
|---|---|
| | TECHNICAL FIELDS SEARCHED (IPC) |

The present search report has been drawn up for all claims

| Place of search | Date of completion of the search | Examiner |
|---|---|---|
| The Hague | 6 February 2020 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)